# EUROPÄISCHE PATENTANMELDUNG

(11) **EP 2 221 489 A1**
(43) Veröffentlichungstag der Anmeldung: **25.08.2010**
(21) Anmeldenummer: 10151683.9
(22) Anmeldetag: 26.01.2010
(51) Int. Cl.: F16B 5/01, F16B 13/14

(54) **Verfahren zum Einbringen eines Klebedübels in eine Leichtbauplatte und Vorrichtung zur Durchführung des Verfahrens**

(30) Priorität: 13.02.2009 DE 102009008846
(71) Anmelder: Hettich-Heinze GmbH & Co. KG, 32139 Spenge (DE)
(72) Erfinder: Andschus, Stefan, 32312, Lübbecke (DE); Sobolewski, Uwe, 32257, Bünde (DE); Schael, Oliver, 32278, Kirchlengern (DE)
(74) Vertreter: Dantz, Jan Henning

(57) **Zusammenfassung**

Ein Verfahren zum Einbringen eines Klebedübels in eine Leichtbauplatte (1) mit einer ersten und einer zweiten Decklage (2, 3) aus Holz oder einem Holzwerkstoff und einer dazwischen liegenden Zwischenlage (4) in Wabenstruktur, wobei zunächst in die erste Decklage (2) eine Bohrung (6) eingebracht und eventuell in deren Grundfläche liegende Abschnitte der Zwischenlage (4) bis zur Innenseite der gegenüberliegenden zweiten Decklage (3) abgetragen werden und anschließend ein Klebedübel (5) durch die Bohrung (6) eingetrieben wird, bis dieser mit seinem Ende auf der zweiten Decklage (3) aufliegt und mit seinem anderen Ende bündig mit der Außenseite der ersten Decklage (2) abschließt, wobei durch das Einbringen der Bohrung (6) und das eventuelle Abtragen von Bereichen der Zwischenlage (4) entstandener Bohrstaub (7) von dem der Bohrung (6) gegenüberliegenden Bereich der zweiten Decklage (3) entfernt wird, und wobei danach ein Klebemittel in den Klebedübel (5) eingebracht und durch entsprechende Kanäle oder vergleichbare Leitsysteme derart verteilt wird, dass der Klebedübel (5) zumindest auf der zweiten Decklage (3) verklebt wird.

Alternativ kann die Bohrung (6) und das eventuelle Abtragen von Bereichen der Zwischenlage in einer das Ablagern von Bohrstaub (7) auf der der Bohrung (6) gegenüberliegenden Fläche der zweiten Decklage (3) ausschließenden Lage der Leichtbauplatte (1) durchgeführt werden.

## Beschreibung

Die vorliegende Erfindung betrifft ein Verfahren zum Einbringen eines Klebedübels in eine Leichtbauplatte mit zwei Decklagen und einer Zwischenlage, wobei zunächst in die erste Decklage eine Bohrung eingebracht und eventuell in deren Grundfläche liegende Abschnitte der Zwischenlage bis zur Innenseite der gegenüberliegenden zweiten Decklage abgetragen werden und anschließend ein Klebedübel durch die Bohrung eingetrieben wird, bis dieser mit einem Ende auf der zweiten Decklage aufliegt und mit seinem anderen Ende bündig mit der Außenseite der ersten Decklage abschließt und dass danach ein Klebemittel in den Klebedübel eingebracht und durch entsprechende Kanäle oder vergleichbare Leitsysteme derart verteilt wird, dass der Klebedübel zumindest auf der zweiten Decklage verklebt wird.

Die Erfindung bezieht sich weiterhin auf eine Vorrichtung zur Durchführung des Verfahrens.

Bislang wird bei dem Einbringen von Klebedübeln in Leichtbauplatten so vorgegangen, dass eine Leichtbauplatte in eine horizontale Lage gebracht wird, wobei die erste Decklage dann die Oberseite und die zweite Decklage der Leichtbauplatte die Unterseite bildet. In die erste Decklage wird dann die Bohrung eingebracht und gegebenenfalls werden die im Bereich der Grundfläche der Bohrung liegenden Bereiche der Zwischenlage bis zum Erreichen der zweiten Decklage abgetragen.

Dabei bilden sich durch den Bohrprozess entstandene Ablagerungen auf der Innenseite der zweiten Decklage, welche im Bereich der Projektionsfläche der Bohrung innerhalb der ersten Decklage liegen.

Anschließend wird in die Bohrung ein Klebedübel eingetrieben und danach ein geeigneter Klebstoff eingebracht, der eine Verklebung zumindest im Bereich zwischen dem unteren Ende des Klebedübels und der zweiten Decklage bewirkt.

Durch den auf der zweiten Decklage aufliegenden Bohrstaub ist eine saubere Verklebung zwischen dem Klebedübel und der zweiten Decklage bislang nicht möglich, wodurch in vielen Fällen die Festigkeit der Verbindung verringert wird.

Der vorliegenden Erfindung liegt die Aufgabe zugrunde, ein Verfahren der gattungsgemäßen Art aufzuzeigen, mittels dessen problemlos eine saubere Verklebung des Klebedübels insbesondere mit der zweiten Decklage erreicht wird.

Eine Lösung dieser Aufgabe besteht darin, dass vor dem Einbringen des Klebemittels durch das Einbringen der Bohrung und das eventuelle Abtragen von Bereichen der Zwischenlage entstandener Bohrstaub von dem der Bohrung gegenüberliegenden Bereich der zweiten Decklage entfernt wird.

Eine zweite Lösung der genannten Aufgabe besteht darin, dass das Einbringen der Bohrung und das eventuelle Abtragen von Bereichen der Zwischenlage in einer das Ablagern von Bohrstaub auf der der Bohrung gegenüberliegenden Fläche der zweiten Decklage ausschließenden Lage der Leichtbauplatte durchgeführt wird.

In beiden Fällen ist sichergestellt, dass ein Klebedübel auf einen praktisch sauberen Bereich der zweiten Decklage aufgesetzt und dort sicher mit einem entsprechenden Klebemittel festgelegt werden kann.

Dadurch wird die Festigkeit der Verbindung wesentlich erhöht und nicht in unkontrollierter Weise beeinträchtigt durch im Klebebereich liegenden Bohrstaub, so dass die Belastbarkeit des Klebedübels im verklebten Zustand auch sichergestellt und gewährleistet werden kann, sie variiert somit nur noch gering.

Das Entfernen des Bohrstaubes erfolgt bevorzugt dadurch, dass in den betreffenden Bereich ein Medium eingeblasen und damit der Bohrstaub aufgewirbelt wird. Damit ist die Klebefläche zwischen Klebedübel und zweiter Decklage weitgehend sauber, so dass eine Verklebung des Klebedübels erfolgen kann, bevor sich der Bohrstaub wieder absetzt.

Es ist aber auch möglich, den Bohrstaub aus dem Klebebereich durch Absaugung zu entfernen. Um die Rückstände der Zwischenlage aus dem Klebebereich zu entfernen, kann der Klebedübel mit zur Absaugung geeigneten Kanälen ausgestattet sein.

Darüber hinaus ist es auch denkbar, den Bohrstaub durch Drehen oder Wenden der Leichtbauplatte aus dem Klebebereich zu entfernen.

Die Entfernung des Bohrstaubes kann auch dadurch erfolgen, dass die Leichtbauplatte in Schwingungen und/oder Vibrationen versetzt wird.

Um die Bohrung in die erste Decklage einzubringen und gegebenenfalls im Grundflächenbereich der Bohrung liegende Rückstände der Zwischenlage abzutragen, ohne dass Bohrstaub auf der Projektionsfläche der Bohrung sich ablagern kann, besteht die Möglichkeit, die Leichtbauplatte in einer horizontal liegenden Position von der Unterseite her mit einer Bohrung zu versehen, in welche dann der Klebedübel eingebracht wird.

Alternativ hierzu ist es auch denkbar, die Leichtbauplatte in einer senkrechten Position anzuordnen und dann die Bohrung in die erste Decklage einzubringen. Auch bei dieser Methode besteht keine Gefahr, dass sich Bohrstaub auf der Projektionsfläche der Bohrung ablagern kann, so dass in beiden Fällen eine saubere Klebefläche für die Verbindung des Klebedübels mit der zweiten Decklage gewährleistet ist.

Die Zwischenlage der Leichtbauplatten weicht in ihren chemischen und / oder physikalischen Eigenschaften von den mindestens zwei Decklagen ab. Derzeit sind Zwischenlagen bekannt, die aus leichten Hölzern wie z.B. Balsa bestehen. Eine weitere Möglichkeit ist, die Zwischenlage aus Fasermaterialien wie z.B. Hanf- oder Strohfasern aufzubauen. Weiterhin können in der Zwischenlage Hohlräume wie z.B. bei Strangpress-Röhrenspanplatten oder Wabenplatten erzeugt werden. Außerdem kann die Dichte zwischen Zwischenlage und Decklagen variiert werden, um eine Leichtbauplatte zu erhalten. Denkbar ist auch, die Zwischenlage als Schaum auszuführen, wie z.B. bei Schaumkernplatten. Weiterhin ist denkbar, zur Erhöhung der Stabilität zusätzlich weitere mit den physikalischen und / oder chemischen Eigenschaften der Decklagen identische Zwischenlagen in das Verbundmaterial einzubringen. Des Weiteren ist diese Vorrichtung und dieses Verfahren für jegliche nach dem zuvor beschriebenen Konzept aufgebaute bisher nicht bekannte Leichtbauplatten geeignet. Die Decklagen der Leichtbauplatten sind bevorzugt darauf ausgelegt Zug- und Druckbelastungen standzuhalten, die Zwischenlage hält bevorzugt Druckbelastungen stand. Eine weitere Betrachtung kann aus Sicht eines Doppel-T-Trägers, wie aus dem Maschinenbau bekannt, erfolgen. Die Zwischenlage einer Leichtbauplatte wirkt sich gemäß dieser Betrachtung weniger auf das Widerstandsmoment der Leichtbauplatte aus als die Decklagen.

Unter Bezugnahme auf die beigefügten Zeichnungen wird das Verfahren im folgenden noch einmal näher erläutert.
- Figur 1: zeigt einen schematisch dargestellten Vertikalschnitt durch eine Leichtbauplatte mit verschiedenen Montagephasen während des Einbringens eines Klebedübels
- Figur 2: zeigt einen schematisch dargestellten Vertikalschnitt durch eine Leichtbauplatte mit verschiedenen Montagephasen während des Bohrens und des Einbringens eines Klebedübels
- Figur 3: zeigt eine schematisch dargestellte Perspektivansicht einer Leichtbauplatte mit verschiedenen Montagephasen während des Bohrens und des Einbringens eines Klebedübels gemäß Figur 2
- Figur 4: zeigt einen schematisch dargestellten Vertikalschnitt durch eine Leichtbauplatte mit verschiedenen Montagephasen während des Bohrens und des Einbringens eines Klebedübels
- Figur 5: zeigt eine schematisch dargestellte Perspektivansicht einer Leichtbauplatte mit verschiedenen Montagephasen während des Bohrens und des Einbringens eines Klebedübels gemäß Figur 4

In den Zeichnungen ist mit dem Bezugszeichen 1 insgesamt eine Leichtbauplatte bezeichnet, welche in bekannter Weise aus einer ersten Decklage 2, einer zweiten Decklage 3 sowie einer dazwischen angeordneten Zwischenlage 4 in Wabenstruktur besteht. Die Decklagen 2 und 3 bestehen üblicherweise aus Karton, Holz oder einem faserartigen Werkstoff.

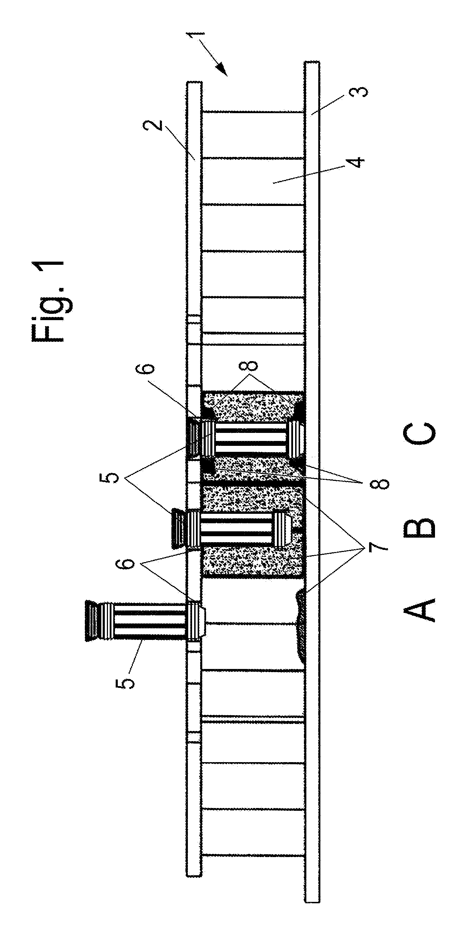

Die Figur 1 zeigt schematisch den erfindungsgemäßen Gedanken des Verfahrens. Um eine sichere Verbindung zwischen den Decklagen 2, 3 der Leichtbauplatte 1 und dem Klebedübel 5 zu gewährleisten darf kein Bohrstaub 7 zwischen Klebemittel 8, Decklagen 2, 3 und Klebedübel 5 gelangen.

Die wabenförmige Zwischenlage 4 wird häufig aus stabilem Karton hergestellt, es können hier aber auch selbstverständlich andere Materialien Verwendung finden.

In diese Leichtbauplatte 1 wird ein an sich bekannter Klebedübel 5 eingebracht. Hierzu wird in die erste Decklage 2 der Leichtbauplatte 1 eine Bohrung 6 eingebracht, dabei werden auch gegebenenfalls in der Projektionsfläche dieser Bohrung 6 liegende Bereiche der Zwischenlage bis zur zweiten Decklage 3 abgetragen, gezeigt in Sektion "A".

Dabei bildet sich Bohrstaub 7, der sich auf der der Bohrung 6 gegenüberliegenden Fläche der zweiten Decklage 3 ablagert. Wird nun der Klebedübel 5 in die Bohrung 6 eingetrieben, wie in Sektion "B" gezeigt, kann beispielsweise durch Einbringen von Druckluft durch den Klebedübel 5 hindurch der Bohrstaub 7 innerhalb der Zwischenlage 4 aufgewirbelt werden, so dass der Klebedübel 5 auf eine praktisch gesäuberte Fläche der zweiten Decklage 3 aufsetzbar ist. Wird nun, wie an sich bekannt, Klebemittel in den Klebedübel 5 eingepresst, verteilt sich dieses Klebemittel zumindest im Auflagebereich zwischen Klebedübel 5 und zweiter Decklage 3. Da der Bohrstaub 7 aus diesem Auflagebereich praktisch vollständig entfernt wurde, findet eine saubere und zuverlässige sowie belastbare Verklebung des Klebedübels gegenüber der zweiten Decklage 3 statt, so wie in Sektion "C" gezeigt. Damit kann die Belastbarkeit des Klebedübels zuverlässig gewährleistet werden und wird nicht durch eine unsaubere Verklebung, bedingt durch die Klebefläche verunreinigenden Bohrstaub, beeinträchtigt.

Der Bohrstaub 7 kann aus dem Klebebereich auch dadurch entfernt werden, dass dieser Bohrstaub 7 in einem separaten Arbeitsgang abgesaugt wird.

Dies bewirkt bezüglich der Verklebung den gleichen angestrebten Effekt, allerdings ist hier ein zusätzlicher Arbeitsgang erforderlich.

Eine Entfernung des Bohrstaubes 7 aus dem Klebebereich ist auch dadurch denkbar, dass die Leichtbauplatte 1 vor dem Einbringen des Klebedübels 5 aus der in der Zeichnung gezeigten horizontalen Lage herausbewegt und der Bohrstaub 7 aus dem Klebebereich abgekippt wird.

Alternativ zu der Vorgehensweise, wie sie bislang beschrieben wurde, besteht auch die Möglichkeit, die Bohrung 6 in die jeweils unten liegende Decklage einer horizontal liegenden Leichtbauplatte 1 einzubringen, so dass die Ablagerung von Bohrstaub 7 auf der nun oben liegenden weiteren Decklage sicher vermieden ist.

Der gleiche vorteilhafte Effekt ergibt sich auch dann, wenn die Leichtbauplatte in einer senkrechten oder nahezu senkrechten Position mit einer Bohrung 6 zur Aufnahme eines Klebedübels 5 versehen wird, da auch in diesem Falle der anfallende Bohrstaub sich nicht auf der der Bohrung 6 gegenüberliegenden Fläche der dortigen Decklage ablagern kann.

Das Einbringen eines Mediums wie z.B. Druckluft zur Aufwirbelung des Bohrstaubes 7 kann letztlich mit dem gleichen Werkzeug erfolgen, mit dem auch ein Klebemittel in den Klebedübel 5 eingebracht wird, wobei hier besonders zweckmäßig ein Werkzeug verwendet werden sollte, welches einen vom Durchführkanal für das Klebemittel unabhängigen Mediumkanal aufweist.

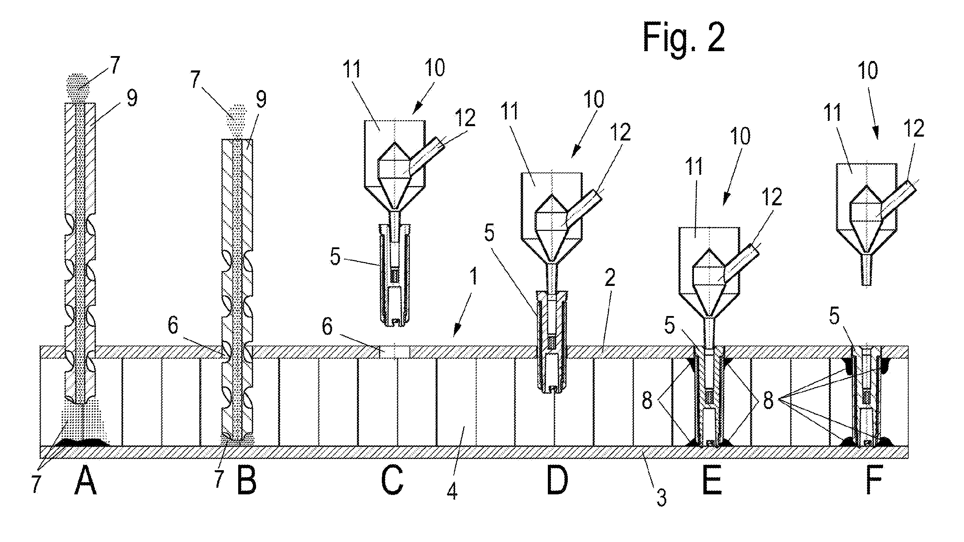

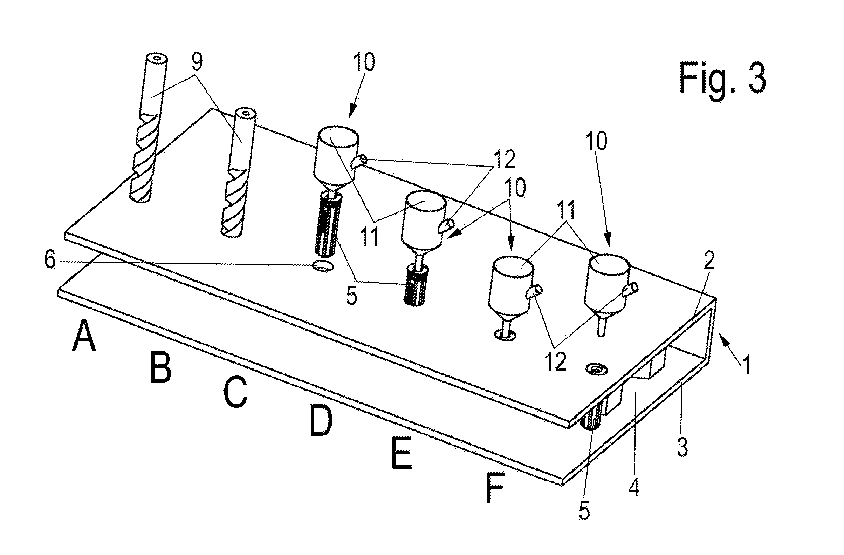

Die Figur 2 und die Figur 3 zeigen das Bohren in eine Leichtbauplatte 1 mit einem Hohlbohrer 9, wobei während des Bohrvorgangs der Bohrstaub 7 durch den Bohrer abgesaugt wird, gezeigt in den Schritten der Sektion "A" und "B". In Sektion "C" wird eine Klebevorrichtung 10 mit einem Klebedübel 5 über der Bohrung 6 in der Decklage 2 der Leichtbauplatte 1 in Position gebracht. Der Schritt gemäß der Sektion "D" zeigt das Eindringen des Klebedübels 5 in die Decklage 2 bzw. die Zwischenlage 2 der Leichtbauplatte 1. Währenddessen können über einen Kanal 12 Medien, die den Klebevorgang positiv beeinflussen, zugeführt werden. Bei einem Zweikomponentenkleber ist beispielweise denkbar, dass eine Komponente in die Bohrung eingebracht wird. Bei beispielsweise stärkebasierten Klebesystemen kann Wasserdampf in die Bohrung eingebracht werden, um ein Verkleben zu ermöglichen. Der Schritt nach Sektion "E" zeigt die Klebemittelzuführung über eine Klebemittelzuführung 11 in der Klebevorrichtung 10. Das Klebemittel 8 wird über Kanäle im Klebedübel 5 an die Klebestellen geleitet. Der Schritt nach Sektion "F" zeigt den sicher verklebten Klebedübel 5, sowie das Herausfahren der Klebevorrichtung 10.

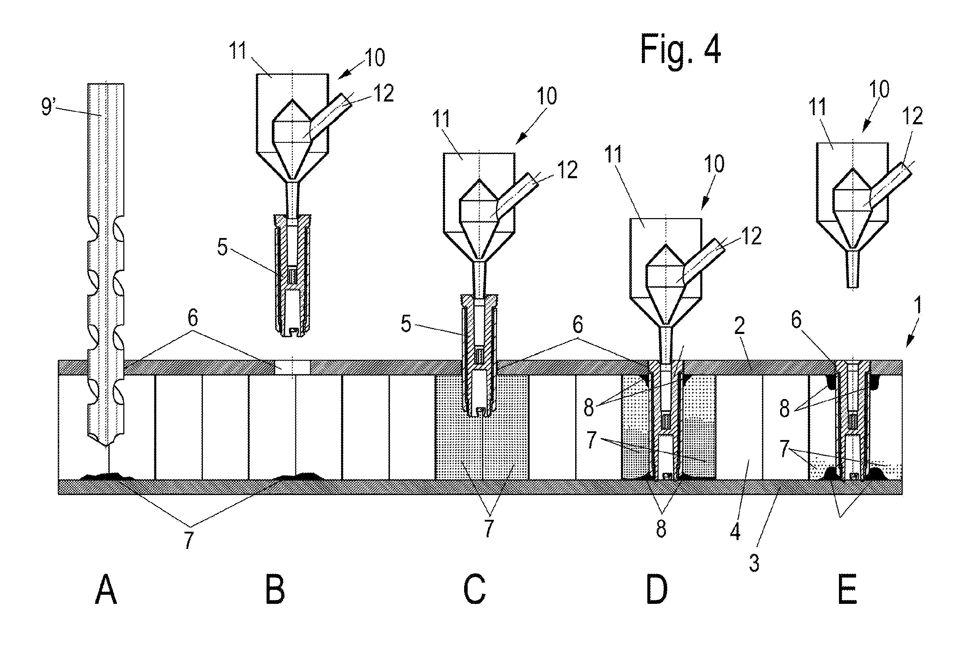

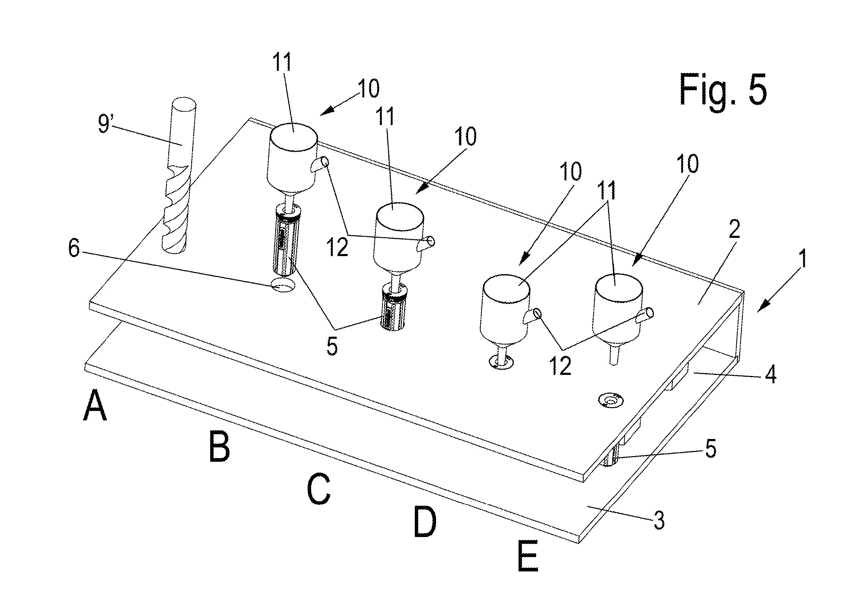

Die Figuren 4 und 5 zeigen ein weiteres Ausführungsbeispiel eines erfindungsgemäßen Verfahrens. Im ersten Schritt gemäß Sektion "A" erfolgt das Bohren in die Decklage 2 der Leichtbauplatte 1 mit einem Bohrer 9'. Der Bohrstaub 7 sammelt sich innen auf der Decklage 3 der Leichtbauplatte 1. Der Schritt gemäß Sektion "B" zeigt die Positionierung der Klebevorrichtung 10 mit einem Klebedübel 5 über der Bohrung 6 einer Leichtbauplatte 1. Der Schritt nach Sektion "C" zeigt das Aufwirbeln des Bohrstaubs 7 durch die Zuführung eines gasförmigen Mediums über den Kanal 12 an der Klebevorrichtung 10 und den Klebedübel 5. Der Bohrstaub 7 wird in der Schwebe gehalten, bis im Schritt gemäß Sektion "D" das Klebemittel über die Klebemittelzuführung 11 und den Klebedübel 5 an die Klebepositionen gelangt ist. Der Bohrstaub kann nach Abschluss des Klebevorgangs sedimentieren. Der Bohrstaub kann somit nicht, oder nur im geringen Maß auf die Innenflächen der Decklagen 2, 3 und zwischen die Decklagen 2, 3, den Klebedübel 5 sowie das Klebemittel 8 gelangen, eine sichere Verbindung ist somit gewährleistet. In Sektion "E" ist gezeigt, dass der Klebevorgang abgeschlossen ist und die Klebevorrichtung zurückgezogen wurde.

Die Figuren 4 und 5 zeigen also auch eine Vorrichtung zur Durchführung des Verfahrens nach Anspruch 1, die aus einer Klebevorrichtung 10 zur Aufnahme und Einführung eines Klebedübels 5 in eine Bohrung 6 einer Leichtbauplatte 1 besteht, wobei die Klebevorrichtung 10 mit einer Klebemittelzuführung 11 zum Einbringen von Klebemittel in den Klebedübel 5 und mit einem Kanal 12 für ein gasförmiges Medium zum Absaugen oder zum Aufwirbeln von Bohrstaub 7 und/oder zum Einführen einer reaktiven Komponente für den Klebevorgang versehen ist. Dabei kann die reaktive Komponente für den Klebevorgang eine Komponente eines Mehrkomponenten-Klebers sein, ebenso kann die reaktive Komponente für den Klebevorgang auch ein Haftvermittler sein.

### Bezugszeichenliste

- 1: Leichtbauplatte
- 2: Erste Decklage
- 3: Zweite Decklage
- 4: Zwischenlage
- 5: Klebedübel
- 6: Bohrung
- 7: Bohrstaub
- 8: Klebemittel
- 9: Hohlbohrer
- 9': Bohrer
- 10: Klebevorrichtung
- 11: Klebemittelzuführung
- 12: Kanal

## Patentansprüche

1. Verfahren zum Einbringen eines Klebedübels (5) in eine Leichtbauplatte (1) mit zwei Decklagen (2,3) und einer Zwischenlage (4), wobei zunächst in die erste Decklage (2) eine Bohrung (6) eingebracht und eventuell in deren Grundfläche liegende Abschnitte der Zwischenlage (4) bis zur Innenseite der gegenüberliegenden zweiten Decklage (3) abgetragen werden und anschließend ein Klebedübel (5) durch die Bohrung (6) eingetrieben wird, bis dieser mit einem Ende auf der zweiten Decklage (3) aufliegt und mit seinem anderen Ende bündig mit der Außenseite der ersten Decklage (2) abschließt und dass danach ein Klebemittel in den Klebedübel (5) eingebracht und durch entsprechende Kanäle oder vergleichbare Leitsysteme derart verteilt wird, dass der Klebedübel (5) zumindest auf der zweiten Decklage (3) verklebt wird, **dadurch gekennzeichnet, dass** vor dem Einbringen des Klebemittels durch das Einbringen der Bohrung (6) und das eventuelle Abtragen von Bereichen der Zwischenlage (4) entstandener Bohrstaub (7) von dem der Bohrung (6) gegenüberliegenden Bereich der zweiten Decklage (3) entfernt wird.

2. Verfahren zum Einbringen eines Klebedübels (5) in eine Leichtbauplatte (1) mit einer ersten und einer zweiten Decklage (2, 3) und einer dazwischen liegenden Zwischenlage (4), wobei zunächst in die erste Decklage (2) eine Bohrung (6) eingebracht und eventuell in deren Grundfläche liegende Abschnitte der Zwischenlage (4) bis zur Innenseite der gegenüberliegenden zweiten Decklage (3) abgetragen werden und anschließend ein Klebedübel (5) durch die Bohrung (6) eingetrieben wird, bis dieser mit einem Ende auf der zweiten Decklage (3) aufliegt und mit seinem anderen Ende bündig mit der Außenseite der ersten Decklage (2) abschließt und dass danach ein Klebemittel in den Klebedübel (5) eingebracht und durch entsprechende Kanäle oder vergleichbare Leitsysteme derart verteilt wird, dass der Klebedübel (5) zumindest auf der zweiten Decklage (3) verklebt wird, **dadurch gekennzeichnet, dass** das Einbringen der Bohrung (6) und das eventuelle Abtragen von Bereichen der Zwischenlage (4) in einer das Ablagern von Bohrstaub (7) auf der der Bohrung (6) gegenüberliegenden Fläche der zweiten Decklage (3) ausschließenden Lage der Leichtbauplatte (1) durchgeführt wird.

3. Verfahren nach Anspruch 1, **dadurch gekennzeichnet, dass** die Entfernung des Bohrstaubes (7) durch Einblasen von Druckluft und Aufwirbeln des Bohrstaubes (7) erfolgt.

4. Verfahren nach Anspruch 1, **dadurch gekennzeichnet, dass** die Entfernung des Bohrstaubes (7) durch Absaugen erfolgt.

5. Verfahren nach Anspruch 1, **dadurch gekennzeichnet, dass** die Entfernung des Bohrstaubes (7) durch Kippen, Drehen oder Wenden der Leichtbauplatte (1) erfolgt.

6. Verfahren nach Anspruch 1, **dadurch gekennzeichnet, dass** die Entfernung des Bohrstaubes (7) durch Versetzen der Leichtbauplatte (1) in Schwingung und / oder Vibration erfolgt.

7. Verfahren nach Anspruch 2, **dadurch gekennzeichnet, dass** die Bohrung (6) in eine horizontal liegende Leichtbauplatte (1) von deren Unterseite ausgehend eingebracht wird.

8. Verfahren nach Anspruch 2, **dadurch gekennzeichnet, dass** die Bohrung (6) in eine der Decklagen (2, 3) bei senkrechter oder in nahezu senkrechter Position der Leichtbauplatte (1) eingebracht wird.

9. Vorrichtung zur Durchführung des Verfahrens nach Anspruch 1, **gekennzeichnet durch** eine Klebevorrichtung (10) zur Aufnahme und Einführung eines Klebedübels (5) in eine Bohrung (6) der Leichtbauplatte (1), wobei die Klebevorrichtung (10) mit einer Klebemittelzuführung (11) zum Einbringen von Klebemittel in den Klebedübel (5) und mit einem Kanal (12) für ein gasförmiges Medium zum Absaugen oder zum Aufwirbeln von Bohrstaub (7) und/oder zum Einführen einer reaktiven Komponente für den Klebevorgang versehen ist.
